# EUROPÄISCHE PATENTANMELDUNG

(11) **EP 3 333 370 A1**
(43) Veröffentlichungstag der Anmeldung: **13.06.2018**
(21) Anmeldenummer: 16202452.5
(22) Anmeldetag: 06.12.2016
(51) Int. Cl.: F01D 11/00, F16J 15/16

(54) **DICHTUNGSANORDNUNG FÜR EINEN ROTOR**

(71) Anmelder: Siemens Aktiengesellschaft, 80333 München (DE)
(72) Erfinder: Kury, Peter, 45257 Essen (DE)

(57) **Zusammenfassung**

Die Erfindung betrifft eine Dichtungsanordnung zur Verwendung bei einem Rotor einer Gasturbine mit zwei Rotorbauteilen (01,51), wobei sich zwischen den Rotorbauteilen (01,51) ein sich im Wesentlichen axial und/oder in Umfangsrichtung erstreckender Spalt (10) vorhanden ist, welcher (10,60) eine reibungsfreie Relativbewegung der Rotorbauteile zur Montage/Demontage zueinander ermöglicht. Zur Abdichtung des Spaltes beim Betrieb der Gasturbine wird vorgeschlagen, an einem Rotorbauteil (01) ein über eine am Außenumfang angeordnete Verbindungsstelle (03) befestigtes, sich radial nach innen erstreckendes Biegeelement anzubringen, welches sich elastisch mit Anlage am anderen Rotorbauteil (51) verformen kann.

## Beschreibung

Die Erfindung betrifft eine Dichtungsanordnung für einen Rotor mit zwei Rotorbauteilen mit einem zwischen den Rotorbauteilen axial und/oder in Umfangsrichtung verlaufendem Spalt.

Im Stand der Technik werden verschiedene Dichtungsanordnungen zur mehr oder weniger vollständigen Abdichtung von zwei benachbarten Rotorbauteilen eingesetzt. Sofern die Bauteile fest und bleiben aneinander gefügt werden können, stellt die Abdichtung meistens kein größeres Problem dar. Jedoch werden ebenso Bauweisen gefordert, bei denen die beiden Rotorbauteile im Stillstand des Rotors zur wiederholten Montage/Demontage relativ zueinander bewegt werden müssen. Dabei gilt es, insbesondere bei höheren Gewichten und an anderer Stelle unvermeidbaren Reibungen, in aller Regel Reibkräfte zu minimieren bzw. zu vermeiden. Auch treten Fälle auf, in denen Toleranzen eine feste Verbindung zwischen den Bauteilen verhindern. Daher werden bei Rotoren, insbesondere bei Gasturbinen, vielfach Spalt-Abdichtungen eingesetzt, bei denen zwei Rotorbauteile benachbart zueinander derartig positioniert werden, dass ein geringer Spalt zwischen Stirnseiten der Rotorbauteile verbleibt. Hierbei ist verläuft der Spalt in aller Regel parallel zur erforderlichen Bewegungsrichtung und hierbei in axialer Richtung, d.h. in Richtung der Rotorachse, oder in Umfangsrichtung.

Nachteilig bei dieser Situation ist der in aller Regel verbleibende, wenn gleich geringe, Spalt, der eine Abdichtung zwischen dem Bauraum im inneren des Rotors und außerhalb des Rotors verhindert. Daher werden in einigen Fällen Dichtelemente eingesetzt, welche im Spalt zwischen den Bauteilen in Art einer Nut-Feder-Verbindung eingesetzt werden, wobei jedoch das Dichtelement beidseitig in einer in radialer Richtung vergrößerten Nut eingesetzt ist. Hierdurch verbleibt zwar eine geringe Reibung, aber es kann eine weitgehende Abdichtung erreicht werden.

Nachteilig bei dieser Lösung ist jedoch die Montage, da das Dichtelement lose in die beidseitigen Nuten eingelegt werden muss.

Aufgabe der vorliegenden Erfindung ist es daher, eine vorteilhafte Spaltabdichtung zu erzielen und hierbei eine reibungsfreie und einfache Montage zu gewährleisten.

Die gestellte Aufgabe wird durch eine erfindungsgemäße Dichtungsanordnung nach der Lehre des Anspruchs 1 gelöst. Ein erfindungsgemäßer Rotor ist im Anspruch 12 angegeben. Vorteilhafte Ausführungsformen sind Gegenstand der Unteransprüche.

Die gattungsgemäße Dichtungsanordnung wird bei einem Rotor eingesetzt, wobei zunächst die Art und die Verwendung des Rotors unerheblich sind. Einen besonderen Vorteil bietet die Art der Dichtungsanordnung in der Verwendung bei einer Gasturbine. Zumindest sind ein erstes Rotorbauteil und ein zweites Rotorbauteil erforderlich. Bei der Dichtungsanordnung erstreckt sich zwischen den Rotorbauteilen ein sich axial und/oder in Umfangsrichtung erstreckender Spalt. Diesbezüglich ist es zunächst unerheblich, ob der Spalt in der Trennung der beiden Rotorbauteile ausschließlich linear parallel zur Rotorachse oder Ring-förmig verläuft oder ob der Spalt einen anderweitigen Verlauf und hierbei wahlweise auch in radialer Richtung schwankend verläuft. Zumindest trennen die Rotorbauteile mit dem zwischen-liegenden Spalt einen Bereich innerhalb des Rotors von einem Bereich außerhalb des Rotors. Der Spalt weist hierbei gattungsgemäß zumindest bei Stillstand des Rotors eine Spalt-Weite zwischen 0,1 mm und 10 mm auf. Dieser ermöglicht - je nach Verwendung - einerseits eine reibungsfreie (bezüglich dieses Spaltes) Montage bzw. Demontage der beiden Rotorbauteile und anderseits einen Toleranzausgleich beispielsweise aufgrund von thermischen Dehnungen.

Erfindungsgemäß wird nunmehr das erste Rotorbauteil angrenzend an den Spalt um ein Biegeelement erweitert. Hierzu wird das Biegeelement an einem Hauptkörper des ersten Rotorbauteils über eine am Außenumfang verlaufende Verbindungsstelle befestigt. Auf der radial nach innen weisenden Seite ausgehend von der Verbindungsstelle ist das Biegeelement hingegen nicht mit dem Hauptkörper verbunden. Somit stehen sich am Spalt das Biegeelement und die Stirnseite des zweiten Rotorbauteils gegenüber. Der erforderliche Spalt zur reibungsfreien Montage/Demontage bzw. zum Toleranzausgleich befindet sich folglich zwischen dem Biegeelement des ersten Rotorbauteils und dem zweiten Rotorbauteil. Entsprechend der Anordnung des Biegeelements am Spalt verläuft dieses naheliegend - entsprechend dem Verlauf des Spalts - in axialer Richtung und/oder in Umgangsrichtung und bei ggf. einer Änderung des Abstand zur Rotorachse über dessen Verlauf.

Dabei ist vorgesehen, dass sich das Biegeelement bei den im Betrieb des Rotors auftretenden Fliehkräften derartig verformt, dass bei fester Verbindung des Biegeelements an der Verbindungsstelle am Hauptkörper des ersten Rotorbauteils mit zunehmendem Abstand von der Verbindungsstelle sich an das Biegeelement dem zweiten Rotorbauteil annähert, so dass zumindest das radial nach innen weisende freie Ende des Biegeelement an der Stirnseite des zweiten Rotorbauteils zur Anlage kommt und den Spalt bei Rotation des Rotors zumindest weitgehend schließt.

Durch die erfindungsgemäße Anbringung eines elastisch verformbaren Biegeelements an der Stirnseite des ersten Rotorbauteils, so dass beim Stillstand des Rotors ein Spalt zur reibungsfreien Montage bzw. Demontage bzw. der notwendige Freiraum zum Toleranzausgleich verbleibt und dennoch bei Rotation des Rotors aufgrund der auftretenden Fliehkräfte ein Verschluss des Spaltes durch das Biegeelement erfolgt, sind beide gegensätzlichen Forderungen nach einer optimalen Spaltabdichtung und einem Spalt im Ruhezustand erfüllt.

Es ist naheliegend, dass sich das Biegeelement zur Ermöglichung einer entsprechenden elastischen Verformung möglichst ohne Knick längs der Axialrichtung bzw. in Umgangsrichtung erstrecken soll. Diesbezüglich sind jedoch Abweichungen von dieser Formgebung mit einem sich in radialer Richtung ändernden Verlauf unerheblich, sofern eine entsprechende Verformung des Biegeelements mit zumindest der Anlage des Biegeelements am zweiten Rotorbauteil über den mehrheitlichen Teil dessen Länge erfolgt, so dass der Spalt bestmöglich geschlossen wird.

Weiterhin ist es naheliegend, dass bei einer Formgebung des ersten Rotorbauteils bzw. des zweiten Rotorbauteils mit einem längs des Spalts unstetigen Verlauf am Außenumfang demgegenüber das Biegeelement mit der Verbindungsstelle vorzugsweise einen gleichmäßigen harmonischen Verlauf aufweist und nicht den entsprechenden Sprüngen oder deutlichen radialen Abweichungen dem Außenumfang des entsprechenden Bauteils folgt. Weiterhin ist es naheliegend, dass das zweite Rotorbauteil mit seiner zum ersten Rotorbauteil weisenden Stirnseite derartig geformt sein muss, dass eine Anlage des freien Endes des Biegeelements an entsprechender Stirnseite des zweiten Rotorbauteils möglich ist.

Die Befestigung des Biegeelements am Hauptkörper des ersten Rotorbauteils ist zunächst unerheblich, sofern bei Fliehkraft ein sicherer Halt des Biegeelements über die Verbindungsstelle am Hauptkörper gewährleistet wird. Hierzu kann in einer ersten vorteilhaften Ausführungsform vorgesehen sein, dass das Biegeelement im Bereich der Verbindungsstelle am Hauptkörper angeschweißt oder angelötet ist. Durch die entsprechende Verbindung des Biegeelements mit dem Hauptkörper kann auch bei den auftretenden Fliehkräften ein zuverlässiger Halt gewährleistet werden.

In besonders vorteilhafter Weise weist das Biegeelement hierbei eine in radialer Richtung vom Verbindungselement bis zum freien Ende wesentlich größere, d.h. zumindest eine dreifache, Ausdehnung auf, als es der Stärke des Biegeelements entspricht. Dies ermöglicht vorteilhaft die Funktion des Biegeelements mit einer elastischen Verformung des Biegeelements bei auftretenden Fliehkräften.

Bei der Auslegung des Biegeelements ist die Spalt-Weite zwischen dem ersten Rotorbauteil, d.h. dem Biegeelement, und dem zweiten Rotorbauteil, d.h. dessen zum Biegeelement weisende Stirnseite, zu berücksichtigen. Zunächst einmal sollte eine möglichst geringe Spalt-Weite angestrebt werden, welche eine zuverlässige reibungsfreie Montage/Demontage der Bauteile ermöglicht bzw. den notwendigen Toleranz- bzw. Dehungsausgleich ermöglicht. Ausgehend von einem sich vorteilhaft ergebenden Spalt mit einer Spalt-Weite zwischen bevorzugt 0,5mm und 5mm ist in besonders bevorzugter Weise eine radiale Höhe des Biegeelements entsprechend zumindest dem dreifachen der Spalt-Weite zu verwenden.

Die Ausführung des Biegeelements hinsichtlich dessen Materialwahl richtet sich insbesondere nach der Verwendung der Dichtungsanordnung und den hierbei auftretenden thermischen Belastungen sowie den hierbei auftretenden Fliehkräften. Besonders bevorzugt wird zur Realisierung des Biegeelements ein Flachmaterial verwendet, welches sich mit konstanter Materialstärke im Wesentlichen radial nach innen erstreckt. In besonders bevorzugter Verwendung der Dichtungsanordnung wird hierbei als Flachmaterial ein Federstahl ausgewählt.

Die Formgebung des Biegeelements kann vielfältig erfolgen, und ist nicht auf ein exaktes planes Element beschränkt. Insbesondere zur Gewährleistung einer entsprechenden Verformung des Biegeelements bei Fliehkraft mit einer Anlage des freien Endes des Biegeelements am zweiten Rotorbauteil wird in einer bevorzugten Ausführungsform das Biegeelement mit einer zur zweiten Rotorscheibe weisenden Prägung versehen und/oder mit einer zum zweiten Rotorbauteil weisenden Schrägstellung positioniert. Dieses führt zu einem Schwerpunkt des Biegeelements mit einem freien von der Verbindungsstelle radial nach innen bis zum freien Ende verlaufenden Abschnitt, welcher axial versetzt ist zum Schwerpunkt eines festen Abschnitts des Biegeelements im Bereich der Verbindungsstelle. Dabei ist die axiale Versetzung des Schwerpunkts im freien Abschnitt zum zweiten Rotorbauteil hin versetzt. Dieses begünstigt die Verformung des Biegeelements bei auftretenden Fliehkräften zum zweiten Rotorbauteil weisend.

Ergänzend oder alternativ zur Prägung oder Schrägstellung des Biegeelements kann zur Sicherstellung, dass sich das Biegeelement bei Fliehkräften zum zweiten Rotorbauteil hin verformt ein am Hauptkörper angeformtes oder angebrachtes Stützelement eingesetzt werden, welches radial nach innen beabstandet zur Verbindungsstelle angeordnet ist. Besonders bevorzugt liegt hierbei das Stützelement lose, dass heißt ohne feste Verbindung, auf der Rückseite am Biegeelement an. Zumindest ist bevorzugt der Abstand zwischen dem Biegeelement und dem Stützelement kleiner als 20% der auf der gegenüberliegenden Seite vorhandenen Spalt-Weite zwischen dem Biegeelement und dem zweiten Rotorbauteil bei Ruhe des Rotors.

Anstelle der unmittelbaren Anlage des Biegeelements am zweiten Rotorbauteil kann ebenso vorgesehen sein, dass das Biegeelement am freien Ende auf der zum zweiten Rotorbauteil weisenden Seite mit einem Anlageelement versehen wird. Dieses Anlageelement unterliegt hierbei nicht der Verformung durch die Fliehkraft, sondern bewirkt vielmehr bei auftretenden Fliehkräften unter Verformung des Biegeelements zum einen, dass sich das Biegeelement bevorzugt zum zweiten Rotorbauteil weisend verformt, und zum anderen, dass das Anlageelement bei Verformung des Dichtelements an der Stirnseite des zweiten Rotorbauteils zur Anlage kommt und den Spalt schließt.

Insbesondere wenn eine vielfache Verformung des Biegeelements zwischen Ruhe des Rotors und Betrieb des Rotors auftritt und hierbei die Funktionsweise des Biegeelements mit einer Spaltbildung bei Ruhe und einer Spaltabdichtung bei auftretenden Fliehkräften zu gewährleisten ist, kann in vorteilhafterweise das Biegeelement durch zwei elastische, radial nach innen erstreckende Biegeabschnitte gebildet werden, welche im Wesentlichen parallel zueinander beabstandet sind. Hierbei sind die Biegeabschnitte auf der nach außen weisenden Seite jeweils über eine Verbindungsstelle oder über eine gemeinsame Verbindungsstelle mit dem Hauptkörper verbunden. Auf der gegenüberliegender zur Rotorachse weisenden Seite am freien Ende des Biegeelements sind die Biegeabschnitte miteinander zu verbinden, so dass sich der Abstand auch am freien Ende zwischen den Biegeabschnitten nicht verändert. Dies führt bei auftretenden Fliehkräften zu einer gleichartigen Verformung beider Biegeabschnitt, wobei die feste Anbindung an den Hauptkörper am nach außen weisenden Ende des Biegeelements und die Verbindung der Biegeabschnitt mit festgelegtem Abstand am freien Ende zu einer Parallelverschiebung des freien Endes der Biegeabschnitte bei Verformung führt. Dies verhindert somit eine unerwünschte Festsetzungen des Biegeelements aufgrund der Fliehkraft am zweiten Rotorbauteil oder eine unkontrollierte Verformung.

Die Verbindung der Biegeabschnitte kann in einer ersten Ausführungsform dadurch hergestellt werden, indem beispielsweise ein einziges Flachmaterial zweimal umgekantet wird. In bevorzugter Ausführungsform wird jedoch eine Verbindung der Biegeabschnitte am freien Ende mittels eines Exzenterkörpers vorgenommen, dessen Schwerpunkt axial näher am zum zweiten Rotorbauteil liegenden Biegeabschnitt gelegen ist. Dieses begünstigt bei auftretenden Fliehkräften eine Verformung des Biegeelements mit den beiden Biegeabschnitten hin zum zweiten Rotorbauteil.

Anstelle der Anbringung eines separaten Biegeelements am Hauptkörper über eine Verbindungsstelle zur Bildung des ersten Rotorbauteils kann wahrweise auch vorgesehen sein, dass das Biegeelement einstückig über die Verbindungsstelle mit dem Hauptkörper verbunden ist. Hierzu ist es erforderlich, dass auf der radial nach innen weisenden Seite unterhalb der Verbindungsstelle des Biegeelements mit dem Hauptkörper eine längs des Spalts verlaufende, nach innen öffnende Nut gebildet ist. Somit kann eine elastische Verformung des Biegeelements ermöglicht werden.

Bei Verwendung einer einstückigen Verbindung des Dichtelements am Hauptkörper über eine Verbindungsstelle ist es zunächst unerheblich, wie die notwendige Elastizität zur Verformung geschaffen wird, so dass das freie Ende des Dichtelements den Spalt bei Rotation schließen kann. In einer ersten bevorzugten Ausführung wird das Dichtelement ausgehend von der Verbindungsstelle hinreichend flexibel ausgeführt. In einer zweiten Alternative kann die Verbindungsstelle selber hinreichend flexibel ausgeführt werden, welches ein Abbiegen des Biegeelements ermöglicht. Weiterhin ist es möglich die beiden vorherigen Alternativen zugleich einzusetzen.

Die unmittelbare Anbringung des Biegeelements einstückig mit dem Hauptkörper verbunden bietet sich in besonders bevorzugter Form an, wenn die bevorzugte Spalt-Weite zwischen 0,1 mm und 1 mm beträgt. Dabei ist weiterhin vorteilhaft eine radiale Höhe des Biegeelements von zumindest dem fünf-fachen der Spalt-Weite vorzusehen.

Ausgehend von einer erfindungsgemäßen Dichtungsanordnung wird die Bildung eines erfindungsgemäßen Rotors ermöglicht, welcher eine erste Rotorscheibe und eine zweite Rotorscheibe aufweist, deren zwischenliegender Spalt über eine Dichtungsanordnung gemäß einer der vorherigen Ansprüche bei Fliehkraft abgedichtet ist.

Um welchen Rotor es sich hierbei handelt ist zunächst unerheblich. Besonders bevorzugt bietet sich die Verwendung der erfindungsgemäßen Dichtungsanordnung jedoch an, wenn es sich bei dem Rotor um den Rotor einer Gasturbine handelt.

Weiterhin wird die Verformung des Biegeelements bei auftretenden Fliehkräften in den Fällen begünstigt, bei denen im Bereich auf der zur Rotorachse weisenden Seite des Spalts ein höherer Druck vorherrscht als auf der nach außen weisenden Seite des Spalts. Sofern der Spalt noch nicht geschlossen ist, führt der höhere Druck im Bereich innerhalb des Rotors zu einer Luftströmung durch den Spalt hindurch, wobei die auftretenden Strömungen zu einem Unterdruck an der Oberfläche des Spalts führen, wobei dieser Unterdruck wiederum zu einem Heranziehen des Biegeelements an die Stirnseite des zweiten Rotorbauteils führt.

In den nachfolgenden Figuren werden verschiedene beispielhafte Ausführungsformen für eine erfindungsgemäße Dichtungsanordnung skizziert. Es zeigen:
- Figuren 1 bis 5: eine Dichtungsanordnung mit einem aus einem Flachmaterial hergestellten Biegeelement;
- Figur 6: eine Dichtungsanordnung mit zwei parallelen Biegeabschnitten;
- Figuren 7 und 8: eine Dichtungsanordnung mit integral mit dem Hauptkörper verbundenem Biegeelement.

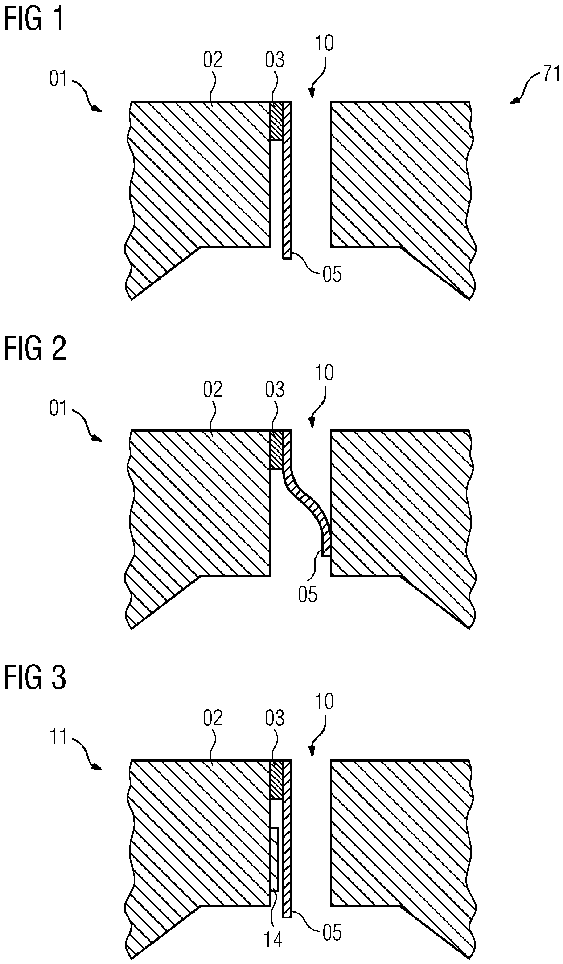

Die Figur 1 zeigt ein exemplarisches einfaches Ausführungsbeispiel für eine erfindungsgemäße Dichtungsanordnung mit einem ersten Rotorbauteil 01 und einem zweiten Rotorbauteil 71. Zwischen den Stirnseiten der Rotorbauteile 01, 71 befindet sich ein Spalt 10, der 10 vorgesehen ist, um einen Toleranzausgleich und/oder eine Relativbewegung der Rotorbauteile 01, 71 relativ zueinander zu ermöglichen. Ob sich der Spalt 10 hierbei axial oder in Umfangsrichtung erstreckt, ist für die erfindungsgemäße Auslegung zunächst unerheblich. Zumindest ist vorgesehen, dass zur Bewirkung einer Spaltabdichtung bei Betrieb des Rotors an der Stirnseite des ersten Rotorbauteils 01 an einem das eigentliche Rotorbauteil 01 bildenden Hauptkörper 02 ein elastisch verformbares Biegeelement 05 angebracht wird. Dieses 05 ist hierbei über die am Außenumfang verlaufenden Verbindungsstelle 03 mit dem Hauptkörper 02 verbunden. Bei dem Biegeelement 05 handelt es sich um ein sich in radialer Richtung erstreckendes Flachmaterial, welches in diesem ersten Ausführungsbeispiel sich ohne jegliche Verformung senkrecht erstreckt und bei geringer Materialstärke eine deutlich größere radiale Erstreckung als die Spalt-Weite des Spalts 10 aufweist.

Hierzu zeigt die Figur 2 die Formgebung des Biegeelements 05 bei Betrieb des Rotors, so dass aufgrund der Verformung des Biegeelements 05, hervorgerufen durch die Fliehkraft, eine Anlage des freien Endes des Biegeelements 05 an der Stirnseite des zweiten Rotorbauteil 71 erfolgt.

In der Figur 3 wird vorheriges Ausführungsbeispiel um ein Stützelement 14 erweitert, welches 14 sich zwischen dem Hauptkörper 02 und dem Biegeelement 05 des ersten Rotorbauteils 11 befindet. Hierbei ist das Stützelement 14 radial nach innen beabstandet zur Verbindungsstelle 03 angeordnet und bildet zum Biegeelement 05 einen minimalen Spalt. Das Stützelement 14 stellt sicher, dass bei auftretenden Fliehkräften eine Verformung des Biegeelements 05 zur Stirnseite des zweiten Rotorbauteils 71 erfolgt und nicht eine Verformung zum Hauptkörper 02 stattfindet.

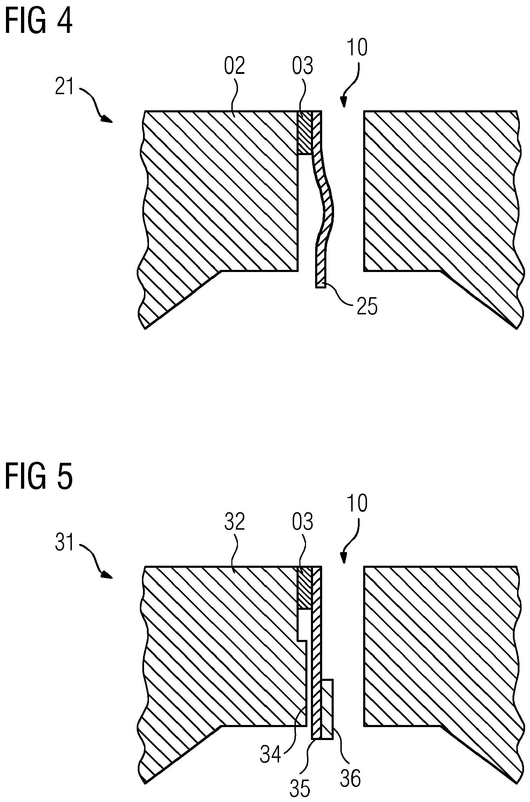

In der Figur 4 wird ein weiteres Ausführungsbeispiel für eine erfindungsgemäße Dichtungsanordnung skizziert, wobei in diesem Beispiel das erste Rotorbauteil 21 mit einem vorgeprägten Biegeelement 25 versehen ist. Durch die Prägung des Biegeelements mit einer Verformung bereits im unbelasteten Zustand hin zur Stirnseite des zweiten Rotorbauteils 71 wird der Schwerpunkt des Biegeelements 25 in einem freien Abschnitt unterhalb der Verbindungsstelle 03 axial zum zweiten Rotorbauteil 71 hin versetzt, so dass zuverlässig eine Verformung des Biegeelements 25 bei Fliehkraft zum zweiten Rotorbauteil weisend erfolgt.

Eine weitere Möglichkeit zur Sicherstellung der Verformung des Biegeelements 35 zum zweiten Rotorbauteil 71 weisend skizziert die Figur 5 mit einem ersten Rotorbauteil 31, bei dem 31 am dort stirnseitig angeordneten Biegeelement 35 nahe dessen freien Endes auf der zum zweiten Rotorbauteil 71 wiesenden Seite ein Anlageelement 36 angebracht ist. Hierbei ist nicht vorgesehen, dass sich das Anlageelement 36 selber verformt, sondern vielmehr soll dieses 36 zum einen sicherstellen, dass die Verformung des Biegeelements 35 zum zweiten Rotorbauteil weisend erfolgt sowie zudem das Anlageelement 36 eine verbesserte Spaltabdichtung mit Anlage an der Stirnseite des zweiten Rotorbauteils 71 ermöglicht. Weiterhin skizziert ist - im Gegensatz zum Ausführungsbeispiel aus Figur 3 - die integrale Anordnung eines Stützelements 34 radial nach innen beabstandet von der Verbindungsstelle 03 zur Verhinderung einer gegenläufigen Verformung des Biegeelements 35.

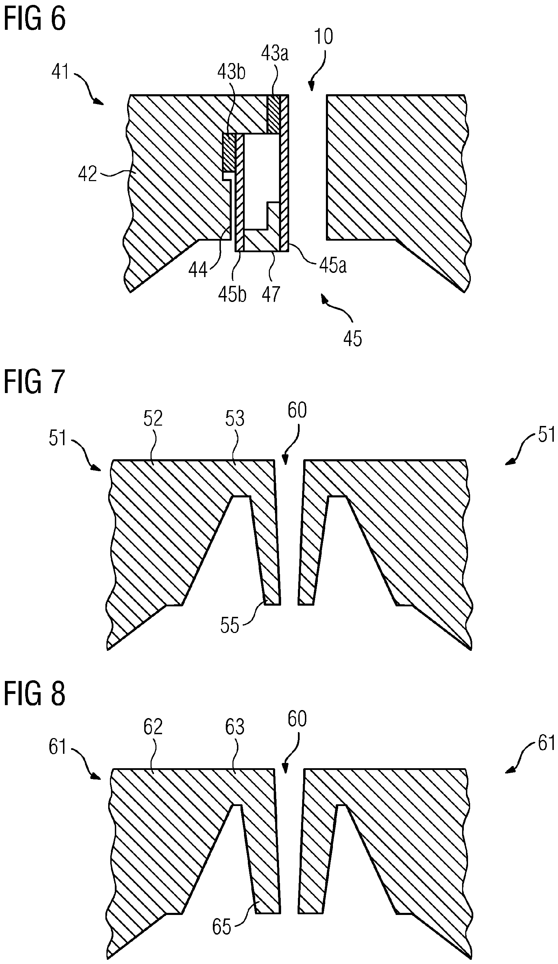

Ein weiteres Ausführungsbeispiel zeigt die Figur 6 mit einem ersten Rotorbauteil 41, bei dem 41 am Hauptkörper 42 ein Biegeelement 45 gebildet aus zwei Biegeabschnitten 45a und 45b angebracht wird. Hierbei sind die Biegeabschnitte 45a und 45b parallel zueinander beabstandet und sind auf der nach außen weisenden Seite jeweils über Verbindungsstellen 43a, 43b mit dem Hauptkörper 42 verbunden. Auf der nach radial innen weisender Seite sind die Biegeabschnitte 45a, 45b über einen Exzenterkörper 47 miteinander verbunden, welcher 47 ebenso den Schwerpunkt des Biegeelements 45 hin zum ersten Biegeabschnitt 45a zum zweiten Rotorbauteil 71 weisend verlagert. Analog vorherigem Beispiel ist wiederum ein Stützelement 44 am Hauptkörper 42 angeformt. Die parallele Anordnung von Biegeabschnitten 45a, 45b führt zu einer Parallelverschiebung des freien Endes des Biegeelements 45 so dass eine definierte Verformung des Biegeelements 45 bei Fliehkraft gewährleistet werden kann.

In der Figur 7 wird nunmehr ein Ausführungsbeispiel einer Dichtungsanordnung fixiert, bei der zwei - rein exemplarisch - gleichartige Rotorbauteile 51 über einen Spalt 60 zueinander beabstandet sind. Zur Bildung eines Biegeelements 55 ist hierbei vorgesehen, dass dieses integral über eine Verbindungsstelle 53 mit dem Hauptkörper 52 ausgebildet wird. Entsprechend bildet sich eine radial nach innen öffnende Nut unterhalb der Verbindungsstelle 53. Aufgrund der integralen Anbindung des Biegeelements 55 am Hauptkörper 52 wird diese Ausführungsform bevorzugt eingesetzt, wenn eine geringe Spaltweite 60 möglich ist. Die integrale Anformung des Biegeelements 55 kann je nach Herstellungsverfahren die Herstellung des Rotorbauteils 51 vereinfachen.

Die Figur 8 zeigt hierzu ein weiteres Ausführungsbeispiel mit einer integralen Anformung eines Biegeelements 65 an den Hauptkörper 62 über eine Verbindungsstelle 63 zur Bildung des Rotorbauteils 61.

Wie bei Vergleich der Ausführung aus Figur 7 und 8 zu entnehmen ist, ist es unerheblich, an welcher Stelle im Biegeelement 55, 65 bzw. der Verbindungsstelle 63, 53 die Verformung letztendlich stattfindet, sofern bei auftretenden Fliehkräften aufgrund einer Verformung eine Anlage des freien Endes des Biegeelements 55, 65 an der Stirnseite des benachbarten zweiten Rotorbauteils möglich ist.

## Patentansprüche

1. Dichtungsanordnung zur Verwendung bei einem Rotor, insbesondere einer Gasturbine, mit einem ersten Rotorbauteil (01,11,21,31,41,51,61) und mit einem zweiten Rotorbauteil (51,61,71), wobei zwischen den Rotorbauteilen (01,11,21,31,41,51,61,71) ein sich im Wesentlichen axial und/oder in Umfangsrichtung erstreckender Spalt (10,60) mit einer Spalt-Weite bei Stillstand des Rotors zwischen 0,1 mm und 10 mm vorhanden ist, welcher (10,60) eine reibungsfreie Relativbewegung der Rotorbauteile (01,11,21,31,41,51,61,71) zur Montage/Demontage zueinander ermöglicht,
**dadurch gekennzeichnet,**
**dass** das erste Rotorbauteil (01,11,21,31,41,51,61) einen Hauptkörper (02,32,42,52,62) und ein über eine am Außenumfang angeordnete Verbindungsstelle (03,43,53,63) befestigtes sich radial nach innen erstreckendes Biegeelement (05,25,35,45,55,65) aufweist, wobei sich das Biegeelement (05,25,35,45,55,65) und/oder die Verbindungsstelle (03,43,53,63) bei auftretenden Fliehkräften verformen kann, so dass das radial innere freien Ende des Biegeelements (05,25,35,45,55,65) am zweiten Rotorbauteil (51,61,71) zur Anlage kommt und hierbei den Spalt (10,60) schließt.

2. Dichtungsanordnung nach Anspruch 1,
**dadurch gekennzeichnet,**
**dass** das Biegeelement (05,25,35,45,45b) am Hauptkörper (02,32,42) angeschweißt oder angelötet ist.

3. Dichtungsanordnung nach Anspruch 1 oder 2,
**dadurch gekennzeichnet,**
**dass** die Spalt-Weite zwischen 0,5 mm und 5 mm beträgt, wobei die radiale Höhe des Biegeelements (05,25,35,45) zumindest dem dreifachen der Spalt-Weite entspricht.

4. Dichtungsanordnung nach einem der Ansprüche 1 bis 3, **dadurch gekennzeichnet,**
**dass** das Biegeelement (05,25) aus einem sich mit konstanter Materialstärke im Wesentlichen radial nach innen erstreckendes Flachmaterial, insbesondere ein Federstahl, hergestellt ist.

5. Dichtungsanordnung nach einem der Ansprüche 1 bis 4, **dadurch gekennzeichnet,**
**dass** das Biegeelement (25) eine zum zweiten Rotorbauteil (71) weisende Prägung oder Schrägstellung aufweist, wobei der Schwerpunkt des Biegeelements (25) im freien Bereich axial versetzt ist zum Schwerpunkt des Biegeelements (25) im Bereich der Verbindungsstelle (03).

6. Dichtungsanordnung nach einem der Ansprüche 1 bis 5, **dadurch gekennzeichnet,**
**dass** radial nach innen beabstandet zur Verbindungsstelle (03) am Hauptkörper (02,32,42) ein Stützelement (14,34,44) angeformt oder angebracht ist, welches (14,34,44) am Biegeelement (05,35,45) lose anliegt oder einen Abstand kleiner als 20% der Spalt-Weite aufweist.

7. Dichtungsanordnung nach einem der Ansprüche 1 bis 6, **dadurch gekennzeichnet,**
**dass** auf dem zur zweiten Rotorbauteil (71) weisenden Seite am freien Ende des Biegeelements (35) ein Anlageelement (36) angeordnet ist, welches unter Fliehkraft am zweiten Rotorbauteil (71) zur Anlage kommt.

8. Dichtungsanordnung nach einem der Ansprüche 1 bis 7, **dadurch gekennzeichnet,**
**dass** das Biegeelement (45) zwei elastische sich radial nach innen erstreckende Biegeabschnitte (45a, 45b) aufweist, welche (45a, 45b) über eine Verbindungsstelle oder jeweilige Verbindungsstellen (43a,43b) mit dem Hauptkörper (42) und am freien Ende unmittelbar oder mittelbar miteinander verbunden sind.

9. Dichtungsanordnung nach Anspruch 8,
**dadurch gekennzeichnet,**
**dass** die Biegeabschnitte (45a,45b) über einen Exzenterkörper (47) miteinander verbunden sind, dessen (47) Schwerpunkt axial näher am zum zweiten Rotorbauteil (71) angeordneten Biegeabschnitt (45a) gelegen ist.

10. Dichtungsanordnung nach Anspruch 1,
**dadurch gekennzeichnet,**
**dass** das Biegeelement (55,65) einstückig über die Verbindungsstelle (53,63) mit dem Hauptkörper (52,62) verbunden ist, wobei unterhalb der Verbindungsstelle (53,63) eine in Umfangsrichtung verlaufende nach innen öffnende Nut gebildet ist.

11. Dichtungsanordnung nach Anspruch 10,
**dadurch gekennzeichnet,**
**dass** die Spalt-Weite zwischen 0,1 mm und 1 mm beträgt, wobei die radiale Höhe des Biegeelements (55,65) zumindest dem fünffachen der Spalt-Weite entspricht.

12. Rotor, insbesondere einer Gasturbine, mit einer ersten Rotorscheibe und einer zweiten Rotorscheibe, deren zwischenliegender Spalt über eine Dichtungsanordnung gemäß einer der vorhergehenden Ansprüche bei Fliehkraft abgedichtet ist.

13. Rotor nach Anspruch 12,
**dadurch gekennzeichnet,**
**dass** bestimmungsgemäß im Betrieb des Rotors auf der inneren Seite des Spaltes (10,60) ein höherer Druck als auf der äußeren Seite des Spaltes (10,60) vorherrscht.
